# EUROPÄISCHE PATENTSCHRIFT

(11) **EP 0 294 316 B1**
(45) Veröffentlichungstag und Bekanntmachung des Hinweises auf die Patenterteilung: **16.02.1994**
(21) Anmeldenummer: 88730125.7
(22) Anmeldetag: 27.05.1988
(51) Int. Cl.: H04Q 3/545, H04Q 11/04, G06F 13/26

(54) **Verfahren zur Steuerung eines digitalen Kommunikationssystems in den Rücksetz-Haltezustand**
Control method for a digital communication system in the reset-hold state
Procédé de commande d'un système de commutation numérique dans la situation remise à zéro-maintien

(30) Priorität: 04.06.1987 DE 3718988
(43) Veröffentlichungstag der Anmeldung: 07.12.1988
(73) Patentinhaber: SIEMENS AKTIENGESELLSCHAFT, 80333 München (DE)
(72) Erfinder: Gericke, Harald, D-4200 Oberhausen (DE); Köninger, Reinhard, Dipl.-Ing., D-4650 Gelsenkirchen (DE)

(56) Entgegenhaltungen:
- NACHRICHTENTECHNISCHE ZEITSCHRIFT N.T.Z., Band 39, Nr. 6, Juni 1986, Seiten 394-397, Berlin, DE; F. KADERALI et al.: "Steuerungskonzept einer ISDN-Vermittlungsanlage"
- ICASSP '86 PROCEEDINGS, Tokyo, 7.-11. April 1986, Band 2, Seiten 26.11.1-26.11.4, IEEE, New York, US; T.D. HOPMANN et al.: "A system design for real time signal processing"
- ICC '85, Chicago, Illinois, 23.-26. Juni 1985, Band 2, Seiten 20.4.1 - 20.4.5,IEEE, New York, US; K.C. ANAND et al.: "R-1000, a general purpose medium size digital switching system"
- PROCEEDINGS OF THE INTERNATIONAL SWITCHING SYMPOSIUM, Florence, 7.-11. Mai 1984, Teil 2, Seiten 34.A.4.1 - 34.A.4.7; M. DABROWSKI et al.: "The hardware and software design for medium size digital switching systems"
- GEC JOURNAL OF SCIENCE AND TECHNOLOGY, Band 45, Heft 3, 1979, Seiten 116-122, Coventry, GB; J.C.D. NISSEN et al.: "A fault-tolerant multimicroprocessor for telecommunication and general applications"

## Beschreibung

Die Erfindung betrifft ein Verfahren zur Steuerung eines digitalen Kommunikationssystems mit einem zentralen Datenprozessor und mit mehreren, periphere Einrichtungen steuernde, dezentrale Ein-Ausgabeprozessoren, wobei das funktionelle Einwirken des zentralen Datenprozessors mit den dezentralen Ein-Ausgabeprozessoren und mit den peripheren Einrichtungen durch eine Organisationssystemsteuerung erfolgt.

Derart definierte Kommunikationssysteme stellen modular aufgebaute Nebenstellenanlagen mit wenigen Standardschnittstellen dar, die entsprechend der zu erfüllenden Aufgaben in unterschiedlichsten Anlagengrößen aufgebaut sind. Die Nebenstellenanlagen können sowohl an öffentliche Netze und Dienste - Fernsprechnetz, Teletexnetz etc. - als auch an private Netze - Unteranlagen, Querverbindungsleitungen - angeschlossen sein. Als Teilnehmeranschlüsse sind analoge und digitale Endgeräte vorgesehen. Außerdem bestehen über entsprechende Schnittstellen zusätzliche Anschlußmöglichkeiten von externen Geräten, wie Drucker, betriebstechnische Terminals (PC) usw..

Die Systemarchitektur der unterschiedlichen Kommunikationssysteme ist einheitlich in drei Ebenen strukturiert:
Peripherie, dezentrale Ein-Ausgabeprozessoren und zentraler Datenprozessor.
Zur Peripherie gehören danach Baugruppen als Schnittstellen zu den angeschalteten Endgeräten und Leitungen (Teilnehmerschaltungen, Leitungsschaltungen) und Baugruppen für den verbindungsaufbau, wie Signalisierungseinrichtungen, Sender und Empfänger. Die zeitkritische Bearbeitung der Peripherie wird durch die dezentralen Ein-Ausgabeprozessoren übernommen, wobei die Anzahl der peripheren Einrichtungen bzw. die der Anschlußeinheiten für jeden Ein-Ausgabeprozessor in Abhängigkeit der maximal zu verarbeitenden Gesamtdatenmenge begrenzt ist. Die Ein-Ausgabeprozessoren sind somit unter anderem für die Steuerung der Standardschnittstellen und der lokalen Busse, der Ziffernauswertung, der Anschaltung von Ton- und Ruftakten und der sicherheitstechnischen Anzeigen vorgesehen.
Der zentrale Datenprozessor dagegen koordiniert die Steuerung sämtlicher im Kommunikationssystem vorhandener Einrichtungen über entsprechende Busverbindungen. Außerdem werden vom zentralen Datenprozessor die Rücksetz-Logik und sicherheitstechnische Vorgänge zentral gesteuert.

Die Schnittstelle zwischen der Peripherie und dem jeweiligen dezentralen Ein-Ausgabeprozessor wird durch eine HDLC-Standardschnittstelle gebildet, die in der peripheren Steuereinrichtung enthalten ist. Dagegen wird die Schnittstelle zwischen dem dezentralen Ein-Ausgabeprozessor und dem zentralen Datenprozessor durch einen Mehrfachzugriffsspeicher gebildet, der von beiden Prozessoren beschrieben und ausgelesen werden kann. Die Steuerung dieses Mehrfachzugriffsspeichers erfolgt üblicherweise durch das eingesetzte Betriebssystem.

Zur Überwachung und Sicherung der einzelnen Funktionsabläufe wird im System ein Unterbrechertakt, ein sogenannter Interrupt, gesteuert, der unter anderem die Zeitglieder entsprechend setzt bzw. löscht. Wird ein bestimmtes Zeitglied mit dem Systeminterrupt nicht zurückgesetzt und läuft ab, so erfolgt neben einer entsprechenden Alarmmeldung eine Unterbrechung in der Datenverarbeitung.

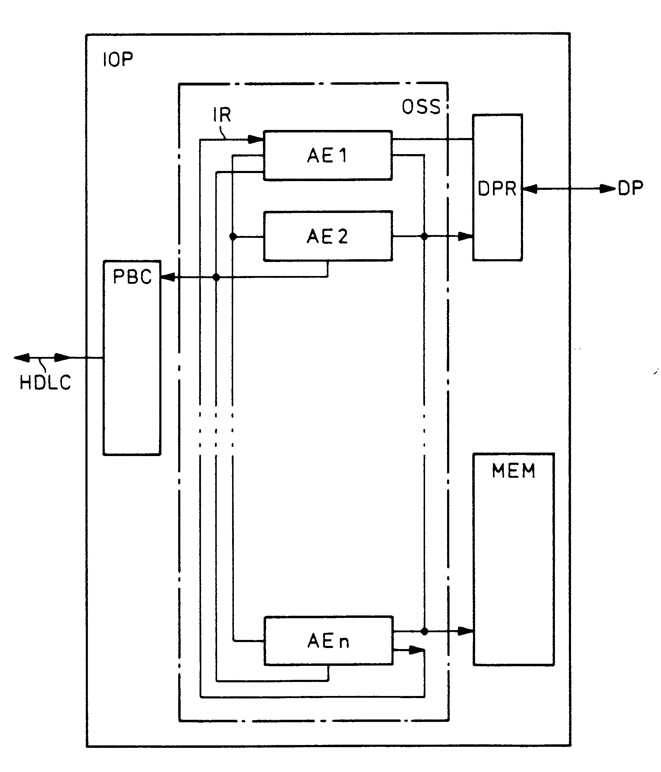

Ein Kommunikationssystem mit einer derartigen Unterbrechungssteuerung ist beispielsweise aus der Druckschrift ntz, Band 39 (1986), Heft 6, "Steuerungskonzept einer ISDN-Vermittlungsanlage", insbesondere Bild 11 einschließlich zugehöriger Beschreibung, bekannt.

Diese Art der Rücksetzung eines Zeitgliedes bedingt eine einheitliche Verarbeitungsebene, d.h. die Organisationssystem steuerung arbeitet mit untereinander gleichwertigen Ablauffolgen. Die der Erfindung zugrunde liegende Aufgabe besteht darin, ein Verfahren anzugeben, bei dem die Rücksetzung des Zeitgliedes durch den Systeminterrupt nicht die Gleichwertigkeit der Ablauffolgen innerhalb der Organisationssystemsteuerung voraussetzt. Erfindungsgemäß wird dies durch die Kombination der Merkmale des Patentanspruchs 1 erreicht.

Mit der in hierarchisch geordneten Ablaufsteuereinheiten mit in Rangfolge fallender Priorität unterteilten Organisationssystemsteuerung ist erreicht, daß Teilfunktionen verschachtelt oder auch parallel gesteuert werden können, sofern sichergestellt ist, daß voneinander unabhängige Schaltfolgen ablaufen. Als wesentlich für die Erfindung ist anzusehen, daß bei voneinander abhängigen prioritätsbehafteten Ablauffolgen die mit niederwertigster Priorität ausgestattete Ablaufsteuereinheit im nicht aktiven Zustand einen Steuerbefehl zur Anschaltung des Rücksetz-Haltezustands der Ablaufsteuereinheit mit höchstwertigster Priorität bewirkt. Damit ist es auch bei Systemen mit mehreren Verarbeitungsebenen innerhalb der Organisationssystemsteuerung, also bei Ablaufsteuereinheiten mit voneinander verschiedener Priorität, möglich, den Rücksetz-Haltezustand zu steuern; denn bei den sonst üblichen Verfahren würde beispielsweise beim Fehllauf einer Ablaufsteuereinheit in einer Endlosschleife die Rücksetzung des Zeitgliedes durch den noch funktionierenden Systeminterrupt erfolgen. Damit dieser Vorgang nicht in den stark belasteten Hauptverkehrszeiten durch vermehrtes Abarbeiten der Ablaufsteuereinheiten mit höherer Priorität auftreten kann, ist gemäß einer vorteilhaften Ausgestaltung der Erfindung der nicht aktive Zustand der Ablaufsteuereinheit mit der niederwertigsten Priorität nach Ablauf einer Zeit erreicht, die größer ist als der Zeitbedarf sämtlicher, mit der höchst- bis zur niederwertigsten Priorität ausgestatteter Ablaufsteuereinheiten in der Organisationssystemsteuerung und wird im Sekundenbereich liegen.

Die Erfindung wird in einem figürlich dargestellten Ausführungsbeispiel näher erläutert, in dem lediglich die wesentlichen, zum Verständnis der Erfindung notwendigen Schalt- und Steuereinrichtungen als Blockschaltbild dargestellt sind.

Der Ein-Ausgabeprozessor IOP enthält die Organisationssystemsteuerung OSS, die aus den Ablaufsteuereinheiten AE1, AE2 bis AEn besteht. Die Ablaufsteuereinheiten AE... sind mit unterschiedlichen Prioritäten versehen, wobei im Ausführungsbeispiel die Ablaufsteuereinheit AE1 die höchstwertigste Priorität aufweist, während die Ablaufsteuereinheit mit niederwertigster Priorität mit AEn bezeichnet ist. Wie die Figur erkennen läßt, ist die Ablaufsteuereinheit AE1 mit der höchstwertigsten Priorität für die Interrupt-Steuerung der Anlage zuständig, und wird über den Rücksetz-Haltezustandsbefehl IR der Ablaufsteuereinheit mit der niederwertigsten Priorität AEn gesteuert. Weiterhin ist erkennbar, daß die Organisationssystemsteuerung OSS mit den peripheren Einrichtungen PBC - dargestellt ist lediglich eine einzige periphere Einrichtung - dem Mehrfachzugriffsspeicher DPR und dem Arbeitsspeicher MEM in Verbindung steht. Der Mehrfachzugriffsspeicher DPR kann sowohl von dem zentralen Datenprozessor DP als auch von den peripheren Einrichtungen PBC Daten übernehmen bzw. übergeben.

Wird also eine der Ablaufsteuereinheiten AE1, AE2 usw. nicht zeitgerecht durchlaufen, so wird das Zeitglied der Ablaufsteuereinheit AEn mit der niederwertigsten Priorität nicht zurückgesetzt und damit der Rücksetz-Haltezustandsbefehl IR ausgelöst. Dieser bewirkt in der Ablaufsteuereinheit mit der höchstwertigsten Priorität AE1 den Systeminterrupt und damit die Unterbrechung der Datenverarbeitung.

## Patentansprüche

1. Verfahren zur Steuerung eines digitalen Kommunikationssystems mit einem zentralen Datenprozessor und mit mehreren, periphere Einrichtungen steuernde, dezentralen Ein-Ausgabeprozessoren, wobei das funktionelle Einwirken des zentralen Datenprozessors mit den dezentralen Ein-Ausgabeprozessoren und mit den peripheren Einrichtungen durch eine Organisationssystemsteuerung erfolgt,
**dadurch gekennzeichnet,**
- daß die Organisationssystemsteuerung (OSS) in hierarchisch geordnete Ablaufsteuerungen (AE1, AE2...AEn) mit in Rangfolge fallender Priorität unterteilt ist,
- daß in der Ablaufsteuereinheit (AEn) mit der niederwertigsten Priorität nach Ablauf einer vorgegebenen Zeitspanne ein den nicht aktiven Zustand anzeigender Steuerbefehl (IR) gebildet und an die Ablaufsteuereinheit mit der höchsten Priorität (AE1) übermittelt wird, und
- daß in der für die Unterbrechungssteuerung zuständigen Ablaufsteuereinheit (AE1) mit der höchsten Priorität nach Empfang des Steuerbefehls (IR) diese in den Rücksetz-Haltezustand gesteuert wird.

2. Verfahren nach Anspruch 1,
**dadurch gekennzeichnet,**
daß die vorgegebene Zeitspanne auf eine vorgegebene Maximalbelastung des Kommunikationssystems abgestimmt ist.

## Claims

1. Method for controlling a digital communications system comprising a central data processor and having a number of decentralized input/output processors controlling peripheral devices, the functional action of the central data processor with the decentralized input/output processors and with the peripheral devices being effected by an organizational system controller,
characterized in that
- the organizational system controller (OSS) is subdivided into hierarchically ordered sequence controllers (AE1, AE2...AEn) with falling order of priority,
- after a predetermined time interval has elapsed, a control command (IR) indicating the non-active state is formed in the sequence control unit (AEn) having the least significant priority and is transmitted to the sequence control unit having the highest priority (AE1), and
- after reception of the control command (IR) in the sequence control unit (AE1) having the highest priority, which is responsible for interrupt control, this sequence control unit is set to the reset-hold state.

2. Method according to Claim 1, characterized in that the predetermined time interval is matched to a predetermined maximum loading of the communications system.

## Revendications

1. Procédé pour commander un système de communication numérique comportant un processeur central de données et plusieurs processeurs décentralisés d'entrée-sortie, qui commandent des dispositifs périphériques, l'action fonctionnelle du processeur central de données avec les processeurs décentralisés d'entrée-sortie et avec les dispositifs périphériques étant réalisée au moyen d'une unité de commande des systèmes d'organisation,
caractérisé par le fait
- que l'unité de commande (OSS) du système d'organisation est subdivisée en unités de commande d'exécution (AE1, AE2... AEn) ordonnées hiérarchiquement et possédant une priorité entrant dans la suite ordonnée,
- que dans l'unité de commande d'exécution (AEn) possédant la priorité la plus faible, après l'écoulement d'un intervalle de temps prédéterminé, une instruction de commande (IR), qui indique l'état non actif, est formée et est transmise à l'unité de commande d'exécution possédant la priorité la plus élevée (AE), et
- que l'unité de commande d'exécution (AE), qui s'occupe de la commande des interruptions et possède la priorité maximale, est ramenée et maintenue à l'état initial, après réception de l'instruction de commande (IR).

2. Procédé suivant la revendication 1, caractérisé par le fait que l'intervalle de temps prédéterminé est réglé sur une charge maximale prédéterminée du système de communication.
